# EUROPÄISCHE PATENTANMELDUNG

(11) **EP 2 071 681 A2**
(43) Veröffentlichungstag der Anmeldung: **17.06.2009**
(21) Anmeldenummer: 08170336.5
(22) Anmeldetag: 01.12.2008
(51) Int. Cl.: H01R 39/58

(54) **Vorrichtung zur Überwachung von Bürsten, insbesondere von Schleifring- oder Kommutatorbürsten, an Elektromaschinen**

(30) Priorität: 13.12.2007 DE 102007055795
(71) Anmelder: Alstom Technology Ltd, 5400 Baden (CH)
(72) Erfinder: Hobelsberger, Max, 5303 Würenlingen (CH)

(57) **Zusammenfassung**

Die Erfindung betrifft eine Vorrichtung zur Überwachung von Bürsten, insbesondere von Schleifring- oder Kommutatorbürsten, an Elektromaschinen mit
- einem Bürstenapparat (1) und
- mindestens einem elektronischen Sensor (3), der im oder am Bürstenapparat (1) angeordnet und ausgebildet ist, elektrische Versorgungsenergie direkt lokal aus dem elektro-magnetischen Umfeld des Bürstenapparats (1) zu beziehen und von ihm erfasste Messdaten mittels elektromagnetischer Strahlung zu übertragen.

## Beschreibung

### Technisches Anwendungsgebiet

Die Erfindung betrifft eine Vorrichtung zur Überwachung von Bürsten, insbesondere von Schleifring- oder Kommutatorbürsten, an Elektromaschinen, insbesondere Generatoren, gemäß Anspruch 1.

### Stand der Technik

Große elektrische Generatoren oder Motoren sind häufig mit Schleifringen oder Kommutatoren und dazugehörigen Bürsten versehen, über die der Erregungsstrom oder Antriebsstrom zugeführt wird. Diese Bürsten sind in der Regel aus Kohle- und Graphitwerkstoffen gefertigt und unterliegen relativ großem Verschleiß. Daher ist es für einen reibungslosen Betrieb einer elektrischen Maschine mit derartigen Bürsten erforderlich, die Bürsten, insbesondere den Bürstenverschleiß, möglichst kontinuierlich zu überwachen.

Aus US 4,950,933 und US 4,739,208 sind Vorrichtungen bekannt, um die Länge von Schleifringbürsten auf einen vorgegebenen Minimalwert zu überwachen. Ein Unterschreiten des vorgegebenen Minimalwerts löst mechanisch oder magnetisch einen Schließ- oder Öffnungsvorgang an einem elektrischen Kontakt aus. Das Schließen oder Öffnen des elektrischen Kontakts wird detektiert und durch ein Signal angezeigt. Dadurch kann in Form einer Längenaussage festgestellt werden, ob die Bürsten den Längengrenzwert unterschritten haben oder nicht.

Die US 5,870,026 offenbart eine Vorrichtung, mit welcher die momentane, noch verbliebene Länge einer Bürste als Analogwert ausgegeben werden kann. Dazu wird ein Widerstandselement in die Bürste eingebettet, das sich im Verlauf der Abnützung verkürzt. Der sich durch die Abnützung verändernde Widerstand wird als Maß für die Länge der Bürste herangezogen.

Nachteilig an diesen bekannten Vorrichtungen ist jedoch, dass teilweise nur eine lokale Anzeige des Fehlerzustandes, das heißt einer abgenutzten Bürste vorgesehen ist. Aufgrund der in der Regel geschlossenen Bauweise von Bürstenapparaten elektrischer Maschinen kann diese Anzeige leicht übersehen oder von Wartungspersonal nicht so leicht kontrolliert werden.

Teilweise wird zwar auch eine Fernanzeige ermöglicht, wozu dann allerdings elektrische Signalverbindungen über Kabel von außen zum Bürstenapparat notwendig sind. Aufgrund der in der Regel hohen elektrischen Spannung und den hohen potenziellen Energien, die bei elektrischen Maschinen, beispielsweise bei einem elektrischen Generator, im Erregungszustand vorhanden sind, ergibt sich jedoch ein großes Gefahrenpotenzial. Maßnahmen zur Beherrschung dieses Gefahrenpotenzials sind in der Regel recht aufwendig.

### Darstellung der Erfindung

Der vorliegenden Erfindung liegt daher die Aufgabe zugrunde, eine Vorrichtung zur Überwachung von Bürsten, insbesondere von Schleifring- oder Kommutatorbürsten, an Elektromaschinen vorzuschlagen, die eine ungefährliche kontinuierliche Fernüberwachung einer Bürste ermöglicht.

Diese Aufgabe wird durch eine Vorrichtung zur Überwachung von Bürsten, insbesondere von Schleifring- oder Kommutatorbürsten, an Elektromaschinen mit den Merkmalen von Anspruch 1 sowie einen Sensor mit den Merkmalen des Anspruchs 14 gelöst. Weitere Ausgestaltungen der Erfindungen ergeben sich aus den abhängigen Ansprüchen.

Ein wesentlicher Gedanke der Erfindung besteht darin, im oder am Bürstenapparat einer Elektromaschine einen elektronischen Sensor anzuordnen, der seine Versorgungsenergie direkt lokal aus dem elektro-magnetischen Umfeld des Bürstenapparats bezieht und erfasste Messdaten mittels elektromagnetischer Strahlung überträgt, das heisst ohne Verwendung elektrischer Signal- oder Verbindungsleitungen. Grundlage der Erfindung ist unter anderem die Erkenntnis, dass im Prinzip Spannungsquellen zur Leistungsversorgung des elektronischen Sensors im Bürstenapparat bereits vorhanden sind.
Einerseits kann gemäß einer Ausführungsform der Erfindung der Spannungsabfall über einer Bürste zur Spannungsversorgung des Sensors verwendet werden. Andererseits kann gemäß einer anderen Ausführungsform der Erfindung auch der Hochfrequenzanteil des über eine Bürste fließenden Erregungsstromes zur Spannungsversorgung des Sensors ausgenutzt werden.
Insbesondere wenn gemäß einer Ausführungsform der Erfindung der elektronische Sensor direkt auf einem CMOS-Chip integriert ist, reichen bereits geringe Spannungen aus, um den Sensor in Betrieb zu nehmen.
Weiterhin können gemäß einer Ausführungsform der Erfindung Spannungswandler eingesetzt werden, die einen relativ geringen Spannungsabfall auf eine für den Sensor geeignete Versorgungsspannung hoch transformieren. Ebenso können gemäß einer Ausführungsform der Erfindung kleine Radiosender für den Sensor verwendet werden, über die mittels elektromagnetischer Strahlung Messdaten übertragen werden und die bereits bei wenigen Volt Spannung zuverlässig arbeiten, wie beispielsweise Nahfeld-Kommunikations (NFC: Near Field Communication)-Schaltkreise. Die Funkübertragung kann hierbei gemäß bevorzugten Ausführungsformen der Erfindung im Gigahertz-Bereich erfolgen, beispielsweise mittel Bluetooth®- oder ZigBee®-Technologie.

Die Erfindung ermöglicht eine Fernüberwachung einer Bürste einer Elektromaschine mit einem im Vergleich zu den eingangs geschilderten Lösungen niedrigen Gefahrenpotenzial. Selbstverständlich können auch mehrere elektronische Sensoren zur Fernüberwachung von einer oder mehreren Bürsten einer Elektromaschine eingesetzt werden.

Gemäß einer Ausführungsform der Erfindung ist nun eine Vorrichtung zur Überwachung von Bürsten, insbesondere von Schleifring- oder Kommutatorbürsten, an Elektromaschinen vorgesehen, mit
- einem Bürstenapparat und
- mindestens einem elektronischen Sensor, der im oder am Bürstenapparat angeordnet und ausgebildet ist, elektrische Versorgungsenergie direkt lokal aus dem elektro-magnetischen Umfeld des Bürstenapparats zu beziehen und von ihm erfasste Messdaten mittels elektromagnetischer Strahlung zu übertragen.
Bei einer derartigen Vorrichtung sind also keine elektrisch leitenden Signal- oder Verbindungsleitungen zum Sensor für eine Fernüberwachung einer Bürste im Bürstenapparat erforderlich, wodurch das aufgrund der in der Regel bei Elektromaschinen auftretenden hohen elektrischen Spannungen und Potenziale vorherrschende Gefahrenpotenzial wesentlich gegenüber Fernüberwachungslösungen verringert werden kann, bei denen elektrische Signal- oder Verbindungsleitungen eingesetzt werden. Unter Bürstenapparat wird hier insbesondere sowohl eine reine Bürste, insbesondere eine Schleifring- oder Kommutatorbürste als auch eine Bürste samt Bürstengehäuse verstanden.

Gemäß einer weiteren Ausführungsform der Erfindung kann der elektronische Sensor nur mit einem elektrischen Pol des Bürstenapparates elektrisch verbunden sein. Das heisst, es ist keine Verbindung zum anderen Pol notwendig.

Der elektronische Sensor kann gemäß einer Ausführungsform der Erfindung durch den an einer Bürste erzeugten Spannungsabfall versorgt werden, beispielsweise indem der Spannungsabfall über einen Spannungswandler des Sensors in eine zur Versorgung des Sensors geeignete elektrische Spannung umgewandelt wird. Bezüglich des Spannungsabfalls ist es beispielsweise bei den bei typischen Elektromaschinen auftretenden Betriebsstromdichten bekannt, dass eine elektrische Spannung von etwa 1 V bis 2 V (Volt) an einer Bürste abfällt, die zudem in der Regel über einen weiten Bereich von Betriebsstromdichten konstant vorliegt. Ein derartiger Spannungsabfall kann beispielsweise mit einem Spannungswandler, der bereits ab 0,9 V sicher arbeitet, auf die für digitale elektronische Schaltungen übliche Betriebsspannung von 5 V hochtransformiert werden. Dadurch können beispielsweise zuverlässig eine digitale Sensorschaltung und eine Funkschaltung wie ein Bluetooth®- oder ZigBee®-Modul betrieben werden.

Die Bürste kann gemäß einer weiteren Ausführungsform der Erfindung eine Hilfsbürste sein, die einen Schleifring einer Elektromaschine kontaktiert und über die nur der zur Versorgung des elektronischen Sensors erforderliche elektrische Strom fließt. Mittels der Hilfsbürste kann beispielsweise sichergestellt werden, dass nur ein kleiner, zur Versorgung des Sensors ausreichender elektrischer Strom zur Speisung des Sensors verwendet wird.

Der andere Pol des elektronischen Sensors kann dann gemäß einer weiteren Ausführungsform der Erfindung mit einer Bürstenhalterung verbunden ist, über die der Erregungsstrom auf die Hauptbürsten des Elektromaschine eingespeist wird. Damit wird dem Sensor zu Speisezwecken die Spannung zugeführt, die auch über den Hauptbürsten abfällt, während der Strom durch die Hilfsbürste begrenzt ist.

Gemäß einer Ausführungsform der Erfindung kann die Hilfsbürste den ganzen Raum der Bürstenhalterung ausfüllen und in ihren Abmessungen etwa den Abmessungen der Hauptbürsten entsprechen. Dies kann zu fertigungstechnischen Vorteilen führen, da die Hilfsbürste im Prinzip einer Hauptbürste entspricht, und daher die gleichen Bürstengehäuse für beide Bürstenarten verwendet werden können.

Gemäß einer weiteren Ausführungsform der Erfindung kann die Hilfsbürste auch in eine Hauptbürste eingebettet und von dieser elektrisch isoliert sein, wodurch eine sehr kompakte Bauweise eines Bürstenapparats erzielt werden kann.

Nach einer anderen Ausführungsform der Erfindung kann auch nahe oder um das Stromzuführungskabel für eine Bürste oder um das Hauptkabel des Polanschlusses eine Koppelspule gelegt sein, wobei eine in der Koppelspule induzierte elektrische Spannung zur Versorgung des elektronischen Sensors verwendet wird. Hierdurch wird der in der Regel im Erregungsstrom einer Elektromaschine enthaltene Hochfrequenzanteil genutzt, um den Sensor mit elektrischer Energie zu speisen. Die Koppelspule kann in Form einer Leiterschleife, beispielsweise ähnlich einer Rogovsky-Spule ausgebildet sein, so dass das sich ändernde magnetische Feld der Stromzuführung der Elektromaschine in dieser Leiterschleife eine elektrische Spannung induziert.

Die Koppelspule kann gemäß einer Ausführungsform der Erfindung derart ausgebildet sein, dass oberhalb von etwa 50 kHz (Kilohertz) ausgekoppelt wird. Insbesondere bei statisch erregten Generatoren fließt aufgrund der Rotorverluste ein nicht unerheblicher Hochfrequenz (HF)-Strom durch die Erregungskabel eines Generators. Unter Hochfrequenz ist hierbei insbesondere der Bereich von einigen 100 Hz (Hertz) bis einigen 100 kHz zu verstehen. Bei einer Auskopplung von oberhalb 50 kHz, wie bei der vorstehend beschriebenen Ausführungsform der Erfindung, können die Abmessungen der Koppelspule klein gehalten werden.

Gemäß einer Ausführungsform der Erfindung kann ferner ein Hochfrequenztransformator zum Erhöhen der in der Koppelspule induzierten elektrischen Spannung vorgesehen sein. Das kann für die Verwendung eines Spannungswandlers von Vorteil sein, da eine hochfrequentere Spannung leichter in eine höhere Spannung transformiert werden kann.

Weiterhin kann gemäß einer Ausführungsform der Erfindung die Koppelspule als Auskoppelspule ausgebildet sein, die entsprechend den Wirkungsprinzipien eines Teslatransformators als schwach gekoppelter Resonanzkreis ausgeführt ist.

Gemäß einer Ausführungsform der Erfindung kann jede Hauptbürste einer Elektromaschine mit einem eigenen elektronischen Sensor ausgerüstet sein. Gemäß einer alternativen Ausführungsform der Erfindung kann auch jeweils ein elektronischer Sensor pro Wicklungspol einer Elektromaschine vorgesehen sein.

Die Erfindung betrifft ferner in einer Ausführungsform einen elektronischen Sensor für eine Vorrichtung nach der Erfindung und wie oben beschrieben,
wobei der elektronische Sensor ausgebildet ist, die von ihm erfassten Messdaten per Funk oder optisch zu übertragen. Die optische Übertragung kann beispielsweise mit einem Lichtwellenleiter, wie einem Glasfaserkabel, erfolgen. Denkbar wäre beispielsweise auch bei direkter Sichtverbindung eine Infrarotübertragung. Die Übertragung per Funk kann beispielsweise im GHz (Gigahertz)-Bereich erfolgen, insbesondere mittels einer NFC-Technologie wie Bluetooth® oder ZigBee®.

Der elektronische Sensor kann gemäß einer Ausführungsform der Erfindung ausgebildet sein, einen oder mehrere der folgenden Parameter der Bürste zu messen: Bürstentemperatur, Vibrationen, Spannungsabfall, Bürstenlänge, Funkenaktivität. Selbstverständlich kann der Sensor auch nur zum Messen der Bürstenlänge und damit Bürstenabnutzung ausgebildet sein. Wenn der Sensor allerdings in hochintegrierter Schaltungstechnik ausgeführt wird, kann im Prinzip eine Vielzahl von Messfunktionen bei relativ günstigen Kosten integriert werden. Dadurch kann eine hochintegrierte und universelle Bürstenüberwachung geschaffen werden.

Gemäß einer Ausführungsform der Erfindung kann der elektronische Sensor direkt auf einen CMOS-Chip integriert sein, der ferner einen Spannungswandler aufweist, der ausgebildet ist, die Speisespannung für den elektronischen Sensor aufzubereiten. CMOS (Complementary Metall Oxid Semiconductor)-Schaltungstechnik, insbesondere digitale CMOS-Schaltungstechnik zeichnet sich durch eine geringe Stromaufnahme aus, was für die autarke Spannungsversorgung des Sensors im Bürstenapparat ohne zusätzliche gesonderte Spannungsquelle für einen zuverlässigen Sensorbetrieb sehr vorteilhaft sein kann.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der weiter unten angeführten Liste der Bezugszeichen aufgeführten Begriffe und zugeordneten Bezugszeichen verwendet.

### Kurze Beschreibung der Zeichnung

Die Zeichnungen zeigen in
- Fig. 1: ein erstes Ausführungsbeispiel einer Vorrichtung zur Überwachung einer Schleifringbürste gemäß der Erfindung, bei dem ein Sensor aus dem Spannungsabfall über die Schleifringbürste gespeist wird; und
- Fig. 2: ein zweites Ausführungsbeispiel einer Vorrichtung zur Überwachung einer Schleifringbürste gemäß der Erfindung, bei dem ein Sensor über eine HF-Koppelspule gespeist wird.

### Wege zur Ausführung der Erfindung

Im Folgenden können gleiche und/oder funktional gleiche Elemente mit den gleichen Bezugszeichen versehen sein.

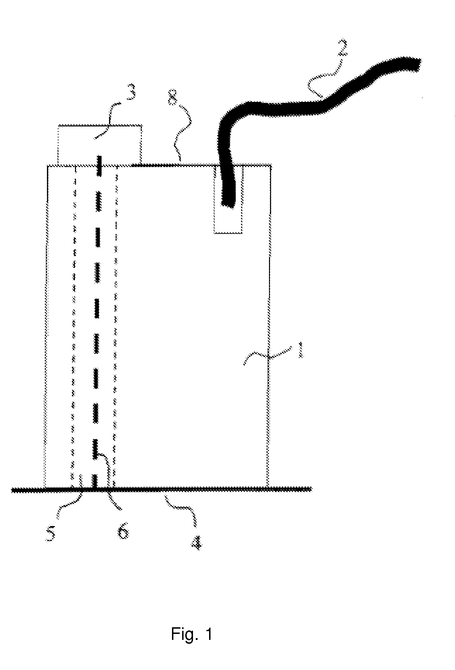

Fig. 1 zeigt eine Schleifring-Kohlebürste 1 eines Bürstenapparates einer (nicht dargestellten) Elektromaschine, an die ein Stromkabel 2 angeschlossen ist, über das beispielsweise ein Erregerstrom für die Elektromaschine fließt. Die Bürste 1 besitzt eine obere Kontaktfläche 8, an der das Stromkabel 2 mit der Bürste 1 kontaktiert ist, und eine weitere Kontaktoberfläche, die mit der Oberfläche 4 des Schleifrings der Elektromaschine in elektrischem Kontakt steht.

In der Bürste 1 ist elektrisch isoliert ein Widerstandselement 5 angeordnet, das dazu dient, die Länge des Bürstenkörpers durch Bestimmung des Widerstandwertes des Elements 5 zu messen. Hierzu wird zunächst der Widerstand des Widerstandselements 5 gemessen und dann einer entsprechenden Bürstenlänge zugeordnet. Das Widerstandselement 5 ist vom umgebenden Bürstenkörper 1 durch eine Isolationsschicht elektrisch getrennt.

An der Bürste 1 ist ein elektronischer Sensor 3 angeordnet, dessen einer Pol zur Spannungsversorgung mit einem isoliert im Widerstandselement 5 angeordneten Kontaktstift 6 elektrisch kontaktiert ist. Der Kontaktstift 6 ist niederohmig und weich, z.B. aus Kupfer oder Graphit gefertigt, und dient zur Kontaktierung der Schleifringoberfläche 4. Er ist vom umgebenden Widerstandselement 5 durch eine elektrisch isolierende Schicht getrennt. Der Sensor 3 wird gespeist von der Spannung, die zwischen Stift 6 und Oberfläche 8 auftritt

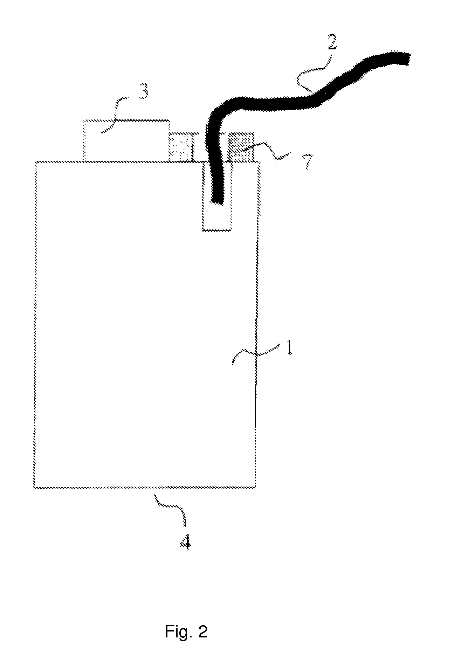

Fig. 2 zeigt ebenfalls eine Schleifring-Kohlebürste 1 eines Bürstenapparates einer (nicht dargestellten) Elektromaschine, an die ein Stromkabel 2 angeschlossen ist, über das beispielsweise ein Erregerstrom für die Elektromaschine fließt. An der Bürste 1 ist ein elektronischer Sensor 3 angeordnet. Der Sensor 3 wird hier über eine HF - Koppelspule 7 mit elektrischer Spannung versorgt, die um das Stromkabel 2 gelegt ist. Durch den Hochfrequenzanteil des durch das Stromkabel 2 fließenden elektrischen Stroms wird in der HF-Koppelspule 7 eine elektrische Spannung induziert, die zur Spannungsversorgung des Sensors 3 verwendet wird.

Zusammenfassund zeichnet sich die Erfindung insbesondere durch folgendes aus:
- Die Energie zur Sensorspeisung wird aus dem lokalen elektromagnetischen Umfeld der Bürste bezogen, wobei für Speisezwecke keine elektrische Verbindung zum anderen Pol oder nach außerhalb des Bürstenhalters vorhanden ist.
- Bei einer Ausführungsform der Erfindung wird für die Sensorspeisung die Spannung benutzt, die im Betrieb an der Kohlebürste abfällt. Das ist im Wesentlichen die Spannung, die annähernd zwischen der Schleifringoberfläche und der oberen Bürstenfläche auftritt.
- Bei einer anderen Ausführungsform der Erfindung wird der Wechselanteil, speziell der hochfrequente Anteil, des Bürstenstromes verwendet, um den Sensor zu speisen. Der Wechselanteil wird induktiv ausgekoppelt.
- Der Sensor übermittelt Messdaten mittels Funk oder über optische Medien an eine Anzeigestation.

### Bezugszeichen

- 1: Kohlebürste
- 2: Stromkabel für Erregungsstrom
- 3: elektronischer Sensor
- 4: Kontaktoberfläche des Schleifrings einer Elektromaschine
- 5: Widerstandselement
- 6: Kontaktstift
- 7: HF-Koppelspule
- 8: obere Oberfläche der Kohlebürste 1

## Patentansprüche

1. Vorrichtung zur Überwachung von Bürsten, insbesondere von Schleifring- oder Kommutatorbürsten, an Elektromaschinen, wenigstens umfassend
- einen Bürstenapparat (1) und
- mindestens einen elektronischen Sensor (3), der im oder am Bürstenapparat (1) angeordnet und dergestalt ausgebildet ist, elektrische Versorgungsenergie direkt lokal aus dem elektro-magnetischen Umfeld des Bürstenapparats (1) zu beziehen, und die erfassten Messdaten mittels elektromagnetischer Strahlung an eine Anzeigeeinrichtung zu übertragen.

2. Vorrichtung nach Anspruch 1,
**dadurch gekennzeichnet, dass**
der elektronische Sensor (3) nur mit einem elektrischen Pol des Bürstenapparates (1) elektrisch verbunden ist.

3. Vorrichtung nach Anspruch 1 oder 2,
**dadurch gekennzeichnet, dass**
der elektronische Sensor (3) durch den an einer Bürste (1) erzeugten Spannungsabfall versorgt wird.

4. Vorrichtung nach Anspruch 3,
**dadurch gekennzeichnet, dass**
die Bürste eine Hilfsbürste ist, die einen Schleifring (4) einer Elektromaschine kontaktiert und über die nur der zur Versorgung des elektronischen Sensors (3) erforderliche elektrische Strom fließt.

5. Vorrichtung nach Anspruch 4,
**dadurch gekennzeichnet, dass**
der andere Pol des elektronischen Sensors (3) mit einer Bürstenhalterung verbunden ist, über die der Erregerstrom auf die Hauptbürsten des Elektromaschine eingespeist wird.

6. Vorrichtung nach Anspruch 5,
**dadurch gekennzeichnet, dass**
die Hilfsbürste den ganzen Raum der Bürstenhalterung ausfüllt und in ihren Abmessungen etwa den Abmessungen einer Hauptbürste entspricht.

7. Vorrichtung nach Anspruch 5 oder 6,
**dadurch gekennzeichnet, dass**
die Hilfsbürste in eine Hauptbürste eingebettet und von dieser elektrisch isoliert ist.

8. Vorrichtung nach einem der vorhergehenden Ansprüche,
**dadurch gekennzeichnet, dass**
nahe oder um das Stromzuführungskabel für eine Bürste oder um das Hauptkabel des Polanschlusses eine Koppelspule (7) gelegt ist, wobei eine in der Koppelspule (7) induzierte elektrische Spannung zur Versorgung des elektronischen Sensors (3) verwendet wird.

9. Vorrichtung nach Anspruch 8,
**dadurch gekennzeichnet, dass**
die Koppelspule (7) derart ausgebildet ist, dass oberhalb von etwa 50 kHz ausgekoppelt wird.

10. Vorrichtung nach Anspruch 8 oder 9,
**dadurch gekennzeichnet, dass**
ferner ein Hochfrequenztransformator zum Erhöhen der in der Koppelspule induzierten elektrischen Spannung vorgesehen ist.

11. Vorrichtung nach Anspruch 8, 9 oder 10,
**dadurch gekennzeichnet, dass**
die Koppelspule (7) als Auskoppelspule ausgebildet ist, die entsprechend den Wirkungsprinzipien eines Teslatransformators als schwach gekoppelter Resonanzkreis ausgeführt ist.

12. Vorrichtung nach einem der vorhergehenden Ansprüche,
**dadurch gekennzeichnet, dass**
jede Hauptbürste einer Elektromaschine mit einem eigenen elektronischen Sensor (3) ausgerüstet ist.

13. Vorrichtung nach einem der Ansprüche 1 bis 11,
**dadurch gekennzeichnet, dass**
jeweils ein elektronischer Sensor (3) pro Wicklungspol einer Elektromaschine vorgesehen ist.

14. Elektronischer Sensor (3) für eine Vorrichtung nach einem der vorhergehenden Ansprüche,
**dadurch gekennzeichnet, dass**
der elektronische Sensor (3) ausgebildet ist, die von ihm erfassten Messdaten per Funk oder optisch zu übertragen.

15. Elektronischer Sensor (3) nach Anspruch 14,
**dadurch gekennzeichnet, dass**
er ausgebildet ist, einen oder mehreren der folgenden Parameter der Bürste zu messen: Bürstentemperatur, Vibrationen, Spannungsabfall, Bürstenlänge, Funkenaktivität.

16. Elektronischer Sensor (3) nach Anspruch 14 oder 15,
**dadurch gekennzeichnet, dass**
er direkt auf einem CMOS-Chip integriert ist, der ferner einen Spannungswandler aufweist, der ausgebildet ist, die Speisespannung für den elektronischen Sensor (3) aufzubereiten.
